Europäisches Patentamt

European Patent Office

Office européen des brevets

(11) Veröffentlichungsnummer: **0 037 974**
**B1**

(12) **EUROPÄISCHE PATENTSCHRIFT**

(45) Veröffentlichungstag der Patentschrift: **20.01.88**

(51) Int. Cl.⁴: **G 03 B 27/52**

(21) Anmeldenummer: **81102491.8**

(22) Anmeldetag: **02.04.81**

(54) **Aufspannvorrichtung für Reproduktionsgeräte.**

(30) Priorität: **14.04.80 DE 3014184**

(43) Veröffentlichungstag der Anmeldung:
**21.10.81 Patentblatt 81/42**

(45) Bekanntmachung des Hinweises auf die
Patenterteilung:
**20.01.88 Patentblatt 88/03**

(84) Benannte Vertragsstaaten:
**AT BE CH FR GB IT LI**

(56) Entgegenhaltungen:
**CH-A- 618 277**
**DE-A-1 474 973**
**DE-A-2 125 125**
**DE-A-2 707 170**
**DE-B-1 065 271**
**GB-A-1 454 226**

(73) Patentinhaber: **DR.-ING. RUDOLF HELL GmbH**
**Grenzstrasse 1-5**
**D-2300 Kiel 14 (DE)**

(72) Erfinder: **Dinse, Wolfgang**
**Kiefernweg 4**
**D-2300 Altenholz (DE)**

## Beschreibung

Aufspannvorrichtung für Reproduktionsgeräte.

### Technisches Gebiet

Die vorliegende Erfindung betrifft eine Ausspanvorrichtung für Reproduktionsgeräte, die Aufnahmeflächen für Vorlage und Aufzeichnungsträger aufweist, die mit durch Unterdruck beaufschlagten Sauglöchern versehen sind.

### Zugrundeliegender Stand der Technik

Bei Reproduktionsgeräten, bei denen eine Vorlage abgetastet wird und zugleich auf einem Aufzeichnungsträger die Reproduktion vorgenommen wird, z.B. Film, verwendet man häufig hohle Walzen mit Saugöffnungen, die an eine Unterdruckleitung angeschlossen sind. Der Unterdruck saugt die Vorlagen und die Filme an die Walzenoberflächen. Dabei besteht häufig die Forderung, daß der Unterdruck in der einen Walze auch dann noch zum Teil erhalten bleibt, wenn auf der anderen Walze die Bespannung gewechselt d.h. die Saugöffnungen geöffnet werden. Bei bisher üblichen Geräten wird daher mit zwei voneinander unabhängigen Unterdrucksystemen gearbeitet. Es sind also zwei Drehdurchführungen und zwei Pumpen erforderlich.

Wie leicht einzusehen ist, ist dieser Aufbau aufwendig.

### Offenbarung der Erfindung

Der vorliegenden Erfindung liegt daher die Aufgabe zugrunde, eine verbesserte Aufspannvorrichtung für solche Reproduktionsgeräte zu schaffen, bei der in der einen Walze noch ein genügender Unterdruck erhalten bleibt, wenn auf der anderen Walze die Bespannung gewechselt, d.h. die Saugöffnungen geöffnet werden.

Die Erfindung erreicht dies durch die im Anspruch 1 angegebenen Merkmale.

Eine vorteilhafte Weiterbildung besteht darin, daß die Drossel einstellbar ist.

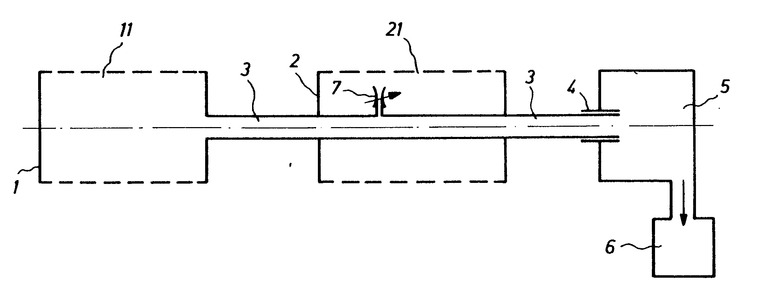

### Kurze Beschreibung der Zeichnung

Die Erfindung wird im folgenden anhand der Figur näher erläutert.

Die Figur zeigt ein prinzipielles Ausführungsbeispiel der Erfindung.

### Bester Weg zur Durchführung der Erfindung Die Erfindung ist in der Figur anhand eines Ausführungsbeispiels eines Reproduktionsgerätes, das mit 2 Walzen zur Aufnahme der Vorlage und des Aufzeichnungsträgers versehen ist.

Eine Walze 1, welche Ausaugöffnungen 11 aufweist, ist mit einer Walze 2, die ebenfalls Sauglöcher 21 aufweist, über eine Unterdruckleitung 3 verbunden.

Diese Unterdruckleitung 3 führt an einem Ende der Walzen über eine Drehdurchführung 4 zu einem Vakuumbehälter 5, der an eine nicht näher dargestellte Saugpumpe 6 angeschlossen ist. Innerhalb der Trommel 2 ist eine verstellbare Drossel 7 vorgesehen. Sobald die Sauglöcher 21 der Walze 2 durch Abnehmen der Vorlage oder des Aufzeichnungsträgers geöffnet werden, wird der Luftstrom vorwiegend durch die Drossel 7 derart beeinflußt, daß in der Walze 1 nich ein genügender Unterdruck erhalten bleibt, ein genügendes Fördervolumen der Pumpe 6 vorausgesetzt.

Sind die Sauglöcher 21 der Walze 2 dagegen ganz oder vorwiegend geschlossen, steigt der Unterdruck auf den für den Betrieb nötigen Wert an. Wegen des geringen Luftdurchsatzes ist dann der Unterdruck im Innern beider Walzen gleich.

Die Erfindung ist nicht auf das dargestellte Ausführungsbeispiel von Trommeln beschränkt, sondern kann genauso bei ebenen Saugplatten zur Anwendung kommen.

### Gewerbliche Verwertbarkeit

Die Erfindung läßt sich mit Vorteil auf dem Gebiet der Reproduktionstechnik einsetzen, und zwar für Aufspannung von Vorlagen und Filmen mittels Sauglöchern, die in den Aufnahmeflächen für Vorlage und Aufzeichnungsträger vorhanden sind. Die Erfindung führt auf einfache Weise zu einer Einsparung beim Geräteaufbau und kann überall dort eingesetzt werden, wo eine Aufspannung von blattförmigem Material mittels solcher Sauglöcher vorgesehen ist.

### · Patentansprüche

1. Aufspannvorrichtung für Reproduktionsgeräte, welche Aufnahmeflächen für Vorlage und Aufzeichnungsträger aufweist, die mit durch Unterdruck beaufschlagten Sauglöchern versehen sind, dadurch gekennzeichnet, daß

a) die Sauglöcher (11, 21) der Aufnahmeflächen für Vorlage und Aufzeichnungsträger parallel an eine gemeinsame Vakuumleitung angeschlossen sind, und

b) daß die Sauglöcher (21) derjenigen Aufnahmefläche, deren Sauglöcher geöffnet werden, über eine Drossel mit der Vakuumleitung verbunden sind.

2. Aufspannvorrichtung nach Anspruch 1, dadurch gekennzeichnet, daß die Drossel einstellbar ist.

### Revendication

1. Dispositif de fixation pour des appareils de reproduction, dispositif comportant, pour le modèle et le support d'enregistrement, des surfaces réceptrices qui sont munies de trous d'aspiration dans lesquels est établie une dépression, dispositif caractérisé en ce que:

a) les trous d'aspiration (11, 12) des surfaces réceptrices pour le modèle et le support d'enregistrement sont raccordés, en parallèle, à une canalisation de vide commune,

b) les trous d'aspiration (21) de la surface réceptrice dont les trous d'aspiration sont ouverts, sont reliés à la canalisation de vide par l'intermédiaire d'un étranglement.

2. Dispositif de fixation charactérisé en ce que l'étranglement est ajustable.

**Claims**

1. Clamping device for reproduction apparatus which has receiving surfaces for original and recording carriers, which surfaces are provided with suction holes acted upon by vacuum, characterised in that

a) the suction holes (11, 21) of the receiving surfaces for original and recording carriers are connected in parallel to a common vacuum line, and

b) that the suction holes (21) of those reception surfaces, of which suction holes are to be opened, are connected to the vacuum line via a throttle.

2. Clamping device according to claim 1, characterized in that the throttle is adjustable.